# EUROPEAN PATENT APPLICATION

(11) **EP 3 617 034 A1**
(43) Date of publication of application: **04.03.2020**
(21) Application number: 19306034.0
(22) Date of filing: 27.08.2019
(51) Int. Cl.: B62B 3/02, B65H 49/32

(54) **TROLLEY FOR REELS**

(30) Priority: 30.08.2018 AU 2018222990
(71) Applicant: Nexans, 92400 Courbevoie (FR)
(72) Inventor: VARATHAN, Mira, MELBOURNE, Victoria 3000 (AU)
(74) Representative: Rosenberg, Muriel Sylvie

(57) **Abstract**

A trolley (1) for transporting one or more reels, like cable reels or the like, the trolley including: a main frame (2) having a least one wheel (12) mounted thereto, the main frame (2) including an upper portion (5) and a base portion (4), the upper and base portion (5, 4) connected via a hinged connection; and a rack portion (3) hingedly coupled to the main frame (2), the rack portion (3) including at least one reel support arm (9) configured to receive a reel (50) thereon, wherein the trolley (1) is adjustable between a folded configuration, for trolley stowage, and a deployed configuration, for reel transport.

## Description

### Field of the invention

The present invention relates to a trolley for transporting reels, like cable reels or the like.

### Background of the invention

To facilitate human powered transport of large, bulky and/or heavy items, over short distances, hand trolleys are often used. Whilst hand trolleys can be effective for packed or boxed loads, they are often not suitable for more oddly shaped items like reels of cable or the like.

Reels of cable are heavy and awkward for a single person to carry. When using a conventional hand trolley, additional strapping is typically required. This strapping can restrict access to loaded reels, and may prevent, for example, easy de-reeling unless completely off loading from the trolley.

Any reference herein to known prior art does not, unless the contrary indication appears, constitute an admission that such prior art is commonly known by those skilled in the art to which the invention relates, at the priority date of this application.

### Summary of the invention

In one broad form, the present invention provides a trolley for transporting one or more reels, like cable reels or the like, the trolley including: a main frame having a least one wheel mounted thereto, the main frame including a upper portion and a base portion, the upper and base portion connected via a hinged connection; and a rack portion hingedly coupled to the main frame, the rack portion including at least one reel support arm configured to receive a reel thereon, wherein the trolley is adjustable between a folded configuration, for trolley stowage, and a deployed configuration, for reel transport.

In one form, the rack is hingedly coupled to the base portion of the main frame.

In one form, in the folded configuration, the trolley is substantially flat.

In one form, the rack portion includes a column with one or more reel support arms cantilevered therefrom. In one form, the distal end(s) of the cantilevered reel support arm(s) is/are bent so as to facilitate retainment of a reel loaded thereon. In one form, in the deployed configuration, the distal ends of the reel support arms extend in a substantially upward direction.

In one form, the rack portion, at a base end thereof, is hingedy coupled to the base portion of the main frame, and, at a top end thereof, the rack portion is releasably securable to the upper portion of the main frame.

In one form, when the top end of the rack portion is secured to the upper portion, the trolley is maintained in the deployed configuration.

In one form, the top end of rack portion must be released from the upper portion to allow movement of the trolley from the deployed to the folded configuration.

In one form, in the deployed configuration the trolley has a substantially triangular structure, the base and the upper portion positioned such that the main frame has a substantially L-shape, and the rack portion extends from the distal end of the base potion to an area at the top end of the upper portion.

In one form, the one or more wheel/s are releasably mounted to the base portion, at a rear end thereof, at which end the upper portion is connected thereto.

In one form, the base portion includes legs at a front end thereof, to assist with levelling of the base portion.

In one form, the trolley is a hand trolley and the upper portion includes a handle portion.

### Brief description of the drawings

A detailed description of a preferred embodiment will follow, by way of example only, with reference to the accompanying figures of the drawings, in which:
Figure 1 is a perspective view of a trolley according to one example of the invention;
Figure 2 is a left side view of the trolley of figure 1;
Figure 3 is a front view of the trolley of figure 1;
Figure 4 is a right side view of the trolley of figure 1;
Figure 5A is an enlarged side view of the hinged connection between main frame and rack portion of from figure 1;
Figure 5B is a cross sectional view of figure 5A along section line A-A;
Figure 6A enlarged side view of wheel mounted to main frame of trolley from figure 1;
Figure 6B is a cross sectional view of figure 6A along section line C-C;
Figure 7A is an enlarged front view of releasable connection point between top end of rack portion and main frame as per trolley of figure 1;
Figure 7B is cross sectional side view of figure 7A along section line B-B;
Figure 8 is perspective view of upper portion of main frame of trolley of figure 1;
Figure 9 is a perspective view of base portion of main frame of trolley of figure 1;
Figure 10 is a side view of base portion of main frame of trolley of figure 1;
Figure 11 is a perspective view of storage box of trolley of figure 1;
Figure 12 is a perspective view of rack portion of trolley of figure 1;
Figure 13 is rear view of the trolley of figure 1, in the folded configuration;
Figure 14 is a rear perspective view of the trolley of figure 1, in the folded configuration;
Figure 15 is a side view of the trolley of figure 1, in the folded configuration;
Figure 16 is a bottom view of the trolley of figure 1, in the folded configuration;
Figure 17 is a side view of a trolley according to one example of the invention having tri-wheel attachment and threaded knob locking mechanism;
Figure 18 is a perspective view of the trolley of figure 17;
Figure 19 is a rear view of the trolley of figure 17;
Figure 20 is an enlarged view of the threaded engagement between locking knob and top end of rack portion; and
Figure 21 is perspective view of an example of a threaded locking knob.

### Detailed description of the embodiment or embodiments

Embodiments of the present invention provide a trolley for transporting one or more reels, like cable reels or the like. The trolley includes a wheel mounted main frame having an upper portion and a base portion. The upper and base portion are connected via a hinged connection.

Furthermore, a rack portion is hingedly coupled to the main frame, the rack portion including at least one reel support arm configured to receive a reel thereon. By virtue of the hinged couplings between the upper portion and the base portion, and between the main frame and the rack portion, the trolley is adjustable between a folded configuration, for stowage, and a deployed configuration, for reel transport, support and/or de-reeling. Generally, the rack portion is hingedly coupled to the base portion of the main frame. Although, it will be appreciated that, in other forms, the rack portion may be hinged to other parts of the main frame, such as, for example, the upper portion. Typically, in either case, in the folded configuration, the trolley is substantially flat, wherein the base portion and rack are brought into alignment with and/or to lie against the upper portion. This provides a more compact configuration of the trolley, assisting with stowage thereof.

Generally, the rack portion includes a column with one or more reel support arms cantilevered therefrom. The distal end(s) of the cantilevered reel support arm(s) is/are typically bent/angled so as to facilitate retainment of a reel mounted thereon. Generally, with reference the deployed configuration, the distal ends of the reel support arms extend in an upward direction.

Generally, the rack portion, at a base end thereof is hingedly coupled to the base portion of the main frame, and, at a top end thereof, the rack portion is releasably securable to the upper portion of the main frame.

When the top end of the rack portion is secured to the upper portion, the trolley is maintained in the deployed configuration. Typically, the top end of the rack portion must be released from the upper portion to allow movement of the trolley from the deployed to the folded configuration.

In the deployed configuration, the trolley typically has a substantially triangular structure, the base and the upper portion positioned such that the main frame has a substantially L-shape, and the rack portion extending from the distal end of the base portion to an area at the top end of the upper portion.

Typically, the trolleys as described herein are hand trolleys, with the upper portions thereof including a handle portion, via which an operator may manoeuvre the trolley. However, it will be appreciated that, in some forms, the trolleys as described herein may not be human powered, but may include a power system, e.g. may be electrically powered, and may be, for example, remote operated.

Generally, the wheels of the trolley are mounted to the base portion of the main frame. Typically, similar to conventional hand trolleys, the wheels are mounted to the rear/proximal end of the base portion, i.e. the same end where the upper portion is mounted. At the opposite front/distal end, the base portion may include legs configured to engage the ground and keep the base portion substantially level (i.e. to counter the height provided at the rear end by the wheels).

When embodied as a hand trolley, it will be appreciated that the trolleys as described herein may be maneuvered similar to a conventional hand trolley. For example, once in the deployed configuration, the presently described trolley may be tilted such that the base portion is lifted off the ground/surface on which the trolley is located, and wheeled therealong to transport reels from one location to another. Also, the trolley may be oriented such that the base portion contacts the ground/surface, so as to support/hold reels loaded thereon in a stationary position, without human intervention. From the stationary position, cable or the like, may be de-reeled from the reels.

Whilst the trolleys as described herein are described as typically used for transporting reels of cable or the like, it will be appreciated that they may be used for transporting reels of any kind of material or reel-like/reel-shaped objects.

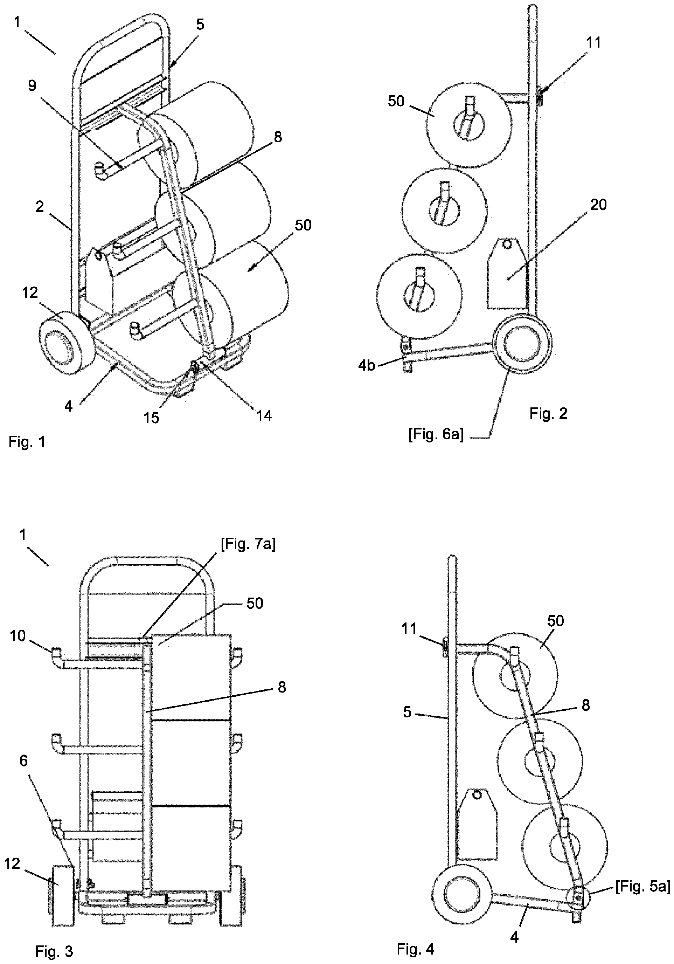

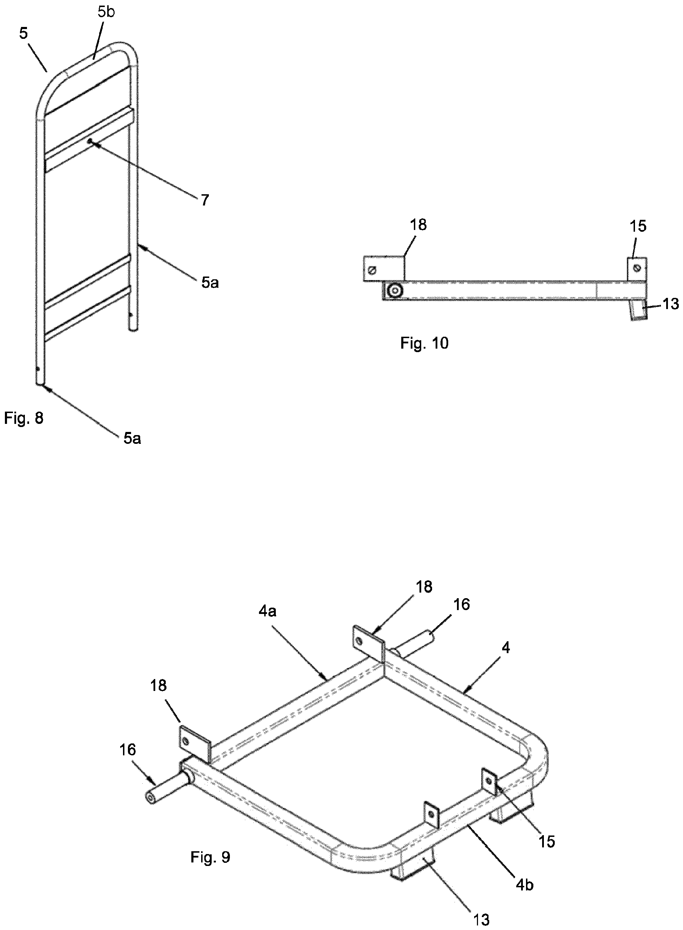

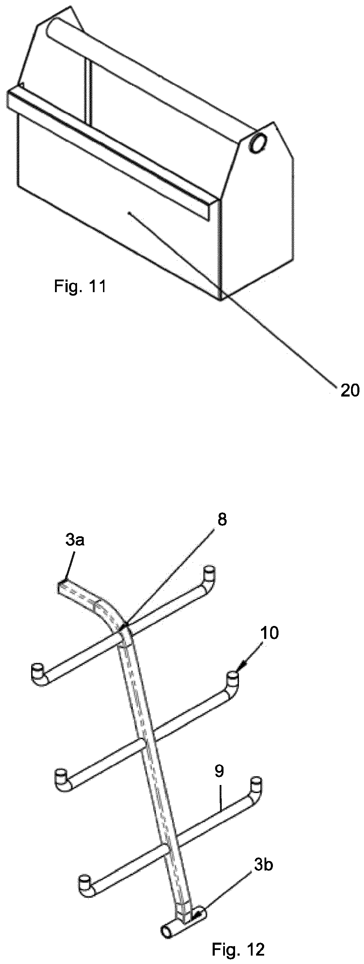

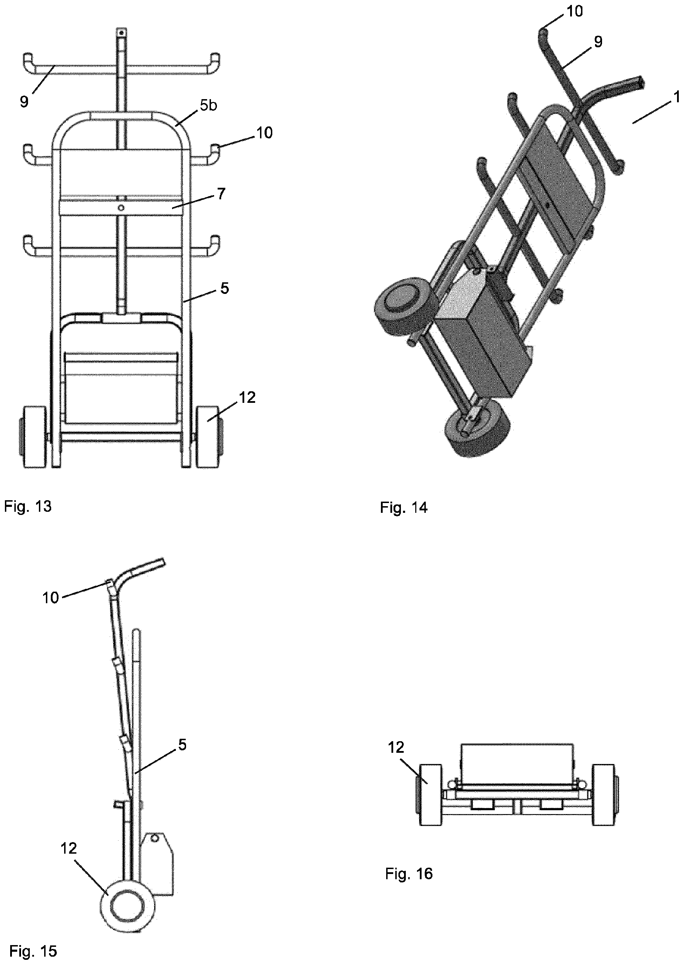

Figures 1 to 15 show one example form of a trolley according to the invention when embodied as a hand trolley. The hand trolley (1) includes a wheel mounted main frame (2) and a rack portion (3) for loading cable reels (50) thereon. The hand trolley (1) is adjustable between a deployed configuration, for transport, support and de-reeling of cable reels, and a folded configuration, such that the hand trolley can be compacted for stowage. The deployed configuration is most clearly shown in figures 1 to 4, whilst the folded configuration is most clearly shown in figure 13 to 16.

The main frame (2) includes a base portion (4) and an upper portion (5) that includes a handle portion (5b). The upper portion (5) has a substantially U-shaped outer with the legs (5a) thereof hingedly connected to plates (18) at the rear/proximal end (4a) of base portion (4). Bolts (6) are inserted through corresponding holes in the plates (18) and legs (5a) to provide the hinged connection. The hinged connection permits folding of the main frame (2) such that the base portion (4) can be aligned up against the upper portion (5).

In addition, the rack portion (3) is hingedly connected to the front/distal end (4b) of the base portion (4), such that, as the base portion (4) is folded against the upper portion (5), the angle between the rack portion (3) and the base portion (4) can be straightened out, and the rack portion (3) can also lie substantially flat against the upper portion (5). Thus, as shown in figure is 13 to 16, in the folded configuration, the hand trolley (1) is substantially flat.

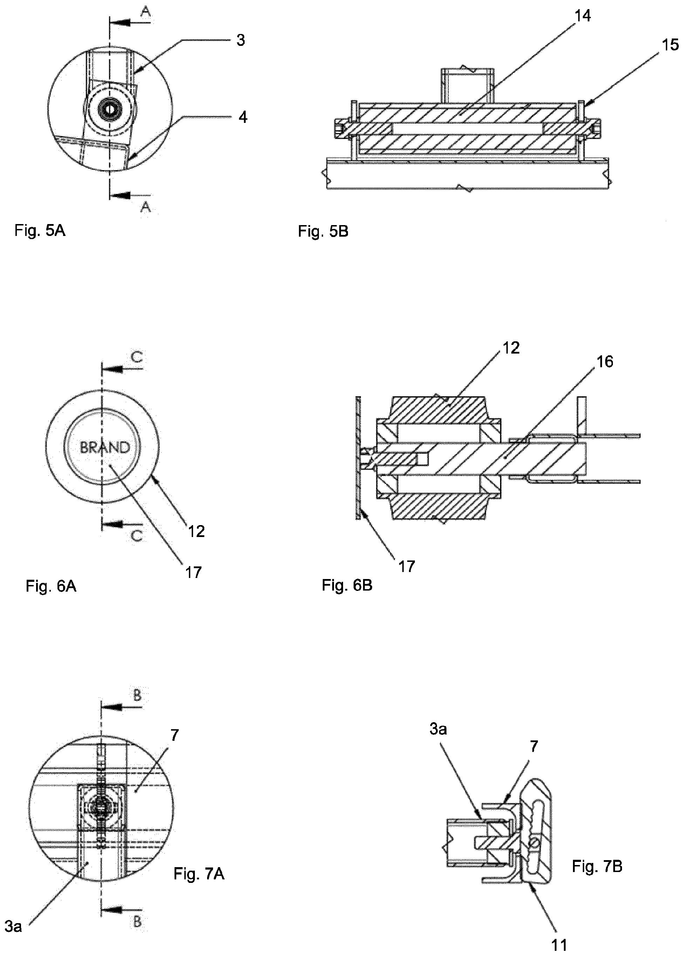

The hinged connection between the rack portion (3) and the base portion (4) of the main frame (2) is shown in detail in figures 5A and 5B. Tube/rod connector (14) of rack portion (3) is loosely bolted between mounting plates (15) of the base portion (4) to provide the hinged connection.

The top end (3a) of the rack portion (3) is releasably securable/lockable to a cross piece (7) at the top part of the upper portion (5). The cross piece (7) has a substantially C-shaped cross section with the top end (3a) of the rack portion to be received between top and bottom flanges thereof (e.g. see figure 7B). In use, once the trolley (1) is unfolded, the top end (3a) of the rack portion (3) is placed against cross piece (7) and releasably secured thereto. In this example, this is achieved using an anti-luce locking mechanism (11) (see figure 7B). Locking of the top end (3a) of the rack portion (3) maintains the trolley (1) in the deployed configuration, and, also, prevents detachment of the top end (3a) of the rack portion (3) from the cross piece (7) during de-reeling. To proceed with folding of the trolley, the top end (3a) of rack portion (3) is first disengaged from cross piece (7).

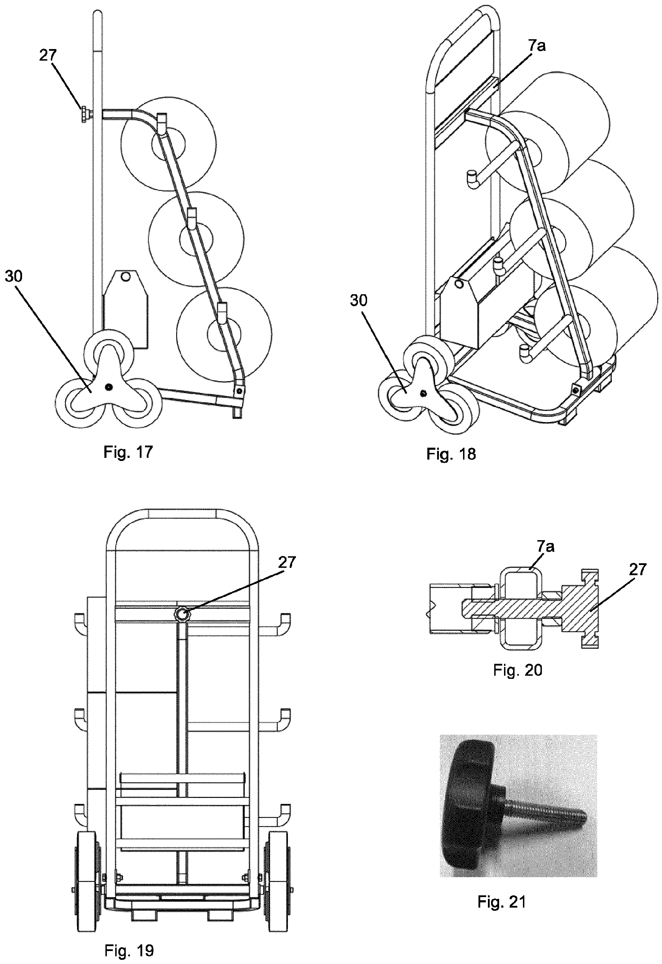

It will be appreciated that, in alternate forms, locking mechanisms other than anti-luce locking mechanisms may be used to releasably secure the top end (3a) of the rack portion to the cross piece (7). For example, as shown in the embodiment of figures 17 to 19, and in detail in figures 20 and 21, a screw threaded locking knob (27) may be used. The knob (27) is inserted through cross piece (7a) to threadedly engage to the top end (3a) of the rack portion (3). Typically, so as to avoid the knob (27) getting lost, the knob does not need to be fully disengaged/removed from the cross piece (7a) after unscrewing from the top end (3a) of rack portion (3). The knob (27) is typically retained in the main frame (2). In the embodiment of figure 20, cross piece (7a) is slightly different to cross piece (7) from the embodiment of figure 1 (i.e. as shown in Figure 7B). The cross piece (7a) is a substantially rectangular tube rather than having a C-shaped cross section. It will be appreciated that cross pieces may take various forms.

As shown, the rack portion (3) includes a central column (8) with a plurality of the reel support arms (9) cantilevered therefrom. It will be appreciated that the reel support arms (9) are received through the centre of the reels (50) during loading. The reels (50) are received loosely around the reel support arms (9) so as to permit rotation of the reels (i.e. for de-reeling of cable). The central column (8) extends from the tube/rod connector (14) at base end of rack portion (3b) to ultimately form the top end (3a) of the rack portion (3). The reel support arms (9) have upturned ends (10) to help stop reels (50) loaded thereon inadvertently falling off.

The wheels (12) of the hand trolley (1) are mounted to the proximal/rear end (4a) of the base portion (4) of the main frame (2). As shown in figure 6B, wheels (12) are mounted to axle parts (16) of base portion (4). Wheel caps (17), for branding or the like, are fixed to ends of axle parts (16). At the distal/front end (4b) of the base portion (4), support legs (13) are provided to assist with levelling of base portion (4) when the trolley is in the stationary, de-reeling position. Grip surfaces (e.g. rubber end caps or the like) are included at the underside of the legs (13) to assist with gripping of the ground/surface so as substantially prevent inadvertent movement of the trolley during cable de-reeling. It will be appreciated that during transport of the reels (50), the trolley (1) is tilted, and the support legs (13) of the base portion (4) are lifted from the ground/surface.

Different wheel attachments/sets may be used with the trolley (1). In figures 17 to 19, a tri-wheel attachment (30) is shown that makes it easier for the trolley to negotiate stairs. The tri-wheel attachment (30) is connected to the base portion such that the entire attachment it is permitted to rotate with respect to the main frame (2). This allows the wheels of the tri-wheel attachment that engage with the ground/stair surface to alternate as the trolley is guided up/down stairs. It will be appreciated that a single wheel, tri-wheel or other wheel attachment may be used interchangeably with the trolley (1) (i.e. wheel attachments are typically releasably attachable to the trolley).

A toolbox/storage box/container (20) is secured to the upper portion (50) to allow for storage of tools or other items. The toolbox may be removable so as to assist with transport of tools etc. to other locations.

Typical use of the hand trolley (1) may be as follows. The trolley (1) may be removed from stowage and unfolded. The top end (3a) of the rack portion (3) may then be secured/locked to the cross piece (7) to maintain the deployed configuration. Cable reels (50) may then be loaded onto the reel support arms (9) and, by wheeling the trolley, transported to various locations. As cable is required, the trolley (1) may be oriented into a standing position, where the legs (13) of the base portion (4) are in contact with the ground. Cable can then be de-reeled as required, without having to remove the reels (50) from the reel support arms (9). Scissors and other tools can be stored in the toolbox (20) and used to cut de-reeled cable. After a cabling task is complete, the reels (50) may be unloaded from the reel support arms (9) and the trolley then returned/folded to the more compact flat configuration for stowage.

It will be appreciated that the presently described trolley provides significant advantages for transporting reels when compared to conventional hand trolleys. In particular, the support arms are configured such that reels can be loaded in an ordered and secure manner, and in a manner that permits de-reeling without having to unload the reels from the trolley. Furthermore, for stowage, the hand trolley can be conveniently folded into a substantially flat configuration that is compact.

Where ever it is used, the word "comprising" is to be understood in its "open" sense, that is, in the sense of "including", and thus not limited to its "closed" sense, that is the sense of "consisting only of". A corresponding meaning is to be attributed to the corresponding words "comprise", "comprised" and "comprises" where they appear.

It will be understood that the invention disclosed and defined herein extends to all alternative combinations of two or more of the individual features mentioned or evident from the text. All of these different combinations constitute various alternative aspects of the invention.

While particular embodiments of this invention have been described, it will be evident to those skilled in the art that the present invention may be embodied in other specific forms without departing from the essential characteristics thereof. The present embodiments and examples are therefore to be considered in all respects as illustrative and not restrictive, and all modifications which would be obvious to those skilled in the art are therefore intended to be embraced therein.

## Claims

1. A trolley for transporting one or more reels, like cable reels or the like, the trolley including:
a main frame having at least one wheel mounted thereto, the main frame including a upper portion and a base portion, the upper and base portion connected via a hinged connection; and
a rack portion hingedly coupled to the main frame, the rack portion including at least one reel support arm configured to receive a reel thereon,
wherein the trolley is adjustable between a folded configuration, for trolley stowage, and a deployed configuration, for reel transport.

2. A trolley as claimed in claim 1, wherein the rack is hingedly coupled to the base portion of the main frame.

3. A trolley as claimed in claim 1 or 2, wherein, in the folded configuration, the trolley is substantially flat.

4. A trolley as claimed in any one of the preceding claims, wherein the rack portion includes a column with one or more reel support arms cantilevered therefrom.

5. A trolley as claimed in claim 4, wherein the distal end(s) of the cantilevered reel support arm(s) is/are bent so as to facilitate retainment of a reel loaded thereon.

6. A trolley as claimed in claim 5, wherein, in the deployed configuration, the distal ends of the reel support arms extend in a substantially upward direction.

7. A trolley as claimed in any one of the preceding claims, wherein the rack portion, at a base end thereof, is hingedy coupled to the base portion of the main frame, and, at a top end thereof, the rack portion is releasably securable to the upper portion of the main frame.

8. A trolley as clamed in claim 7, wherein, when the top end of the rack portion is secured to the upper portion, the trolley is maintained in the deployed configuration.

9. A trolley as clamed in claim 7 or 8, wherein the top end of rack portion must be released from the upper portion to allow movement of the trolley from the deployed to the folded configuration.

10. A trolley as claimed in any one of the preceding claims, wherein, in the deployed configuration the trolley has a substantially triangular structure, the base and the upper portion positioned such that the main frame has a substantially L-shape, and the rack portion extends from the distal end of the base potion to an area at the top end of the upper portion.

11. A trolley as claimed in any one of the preceding claims, wherein the one or more wheel/s are releasably mounted to the base portion, at a rear end thereof, at which end the upper portion is connected thereto.

12. A trolley as claimed in claim 11, wherein the base portion includes legs at a front end thereof, to assist with levelling of the base portion.

13. A trolley as claimed in any one of the preceding claims, wherein the trolley is a hand trolley and the upper portion includes a handle portion.
